# EUROPEAN PATENT SPECIFICATION

(11) **EP 2 480 584 B1**
(45) Date of publication and mention of the grant of the patent: **20.11.2013**
(21) Application number: 10781583.9
(22) Date of filing: 20.09.2010
(51) Int. Cl.: C08G 18/83, C08J 11/00, C08J 11/04, C08J 11/10, C08J 11/18, C08J 11/24

(54) **RAW MATERIAL FOR POLYURETHANE PRODUCTION AND PROCESS FOR ITS PREPARING FROM WASTE POLYURETHANE**
ROHMATERIAL ZUR HERSTELLUNG VON POLYURETHAN UND VERFAHREN ZU SEINER HERSTELLUNG AUS POLYURETHANABFÄLLEN
MATIÈRE PREMIÈRE POUR LA FABRICATION DE POLYURÉTHANE ET PROCÉDÉ POUR SA PRÉPARATION À PARTIR DE DÉCHETS DE POLYURÉTHANE

(30) Priority: 22.09.2009 CZ 20090620
(43) Date of publication of application: 01.08.2012
(73) Proprietor: Institute of Macromolecular Chemistry AS CR v.v.i., 162 06 Praha 6 (CZ)
(72) Inventor: VLCEK, Tomas, 686 01 Uherske Hradiste (CZ); BENES, Hynek, 198 00 Praha 9 (CZ); KRULIS, Zdenek, 155 00 Praha 5 (CZ)
(74) Representative: Beetz & Partner
(86) International application number: PCT/CZ2010/000101
(87) International publication number: WO 2011/035743

(56) References cited:
- EP-A1- 0 718 349
- WO-A2-2009/024102
- DE-A1- 2 759 054
- DE-B- 1 141 784
- BRUECKNER H ET AL: "PUR-RRIM IST RECYCLINGFAEHIG", KUNSTSTOFFE, CARL HANSER VERLAG, MUNCHEN, DE, vol. 81, no. 9, 1 September 1991 (1991-09-01), pages 751-759, XP000288894, ISSN: 0023-5563

## Description

### Technical field

The invention concerns a raw material for polyurethane production and the method of its production from waste polyurethane using a bioreagent obtained from natural sources.

### Background art

Polyurethanes make ca. 5 % of total plastics production. Thanks to their versatility they find applications in a number of industrial branches, first of all in the form of expanded materials, and soft polyurethane foams amount to more than 50 wt. % of total polyurethane production. In recent years, considerable attention has been devoted to possible effective reuse of polyurethane waste, which is a consequence of considerable production of this material. Material recycling consists in grinding or cutting of waste polyurethane, which, after pressing (patents DE 10,019,800; DE 4,040,204; DE 4,131,172) or adding a binder (patents DE 4,306,626; DE 4,306,447; DE 4,104,196; GB 2,245,570) utilized in undemanding applications as an acoustic-insulation or packing material. Another method of physical recycling includes grinding of waste polyurethane, which is then mixed with a virgin polyol and, as a suspension, is incorporated into a new polyurethane product (patent CN 101,096,426). However, the content of the crushed material in polyol is limited to max. 10-15 wt.%.

Utilization of polyurethane waste for obtaining energy (by burning, pyrolysis or gasification) and as a raw material is a suitable solution, especially for strongly contaminated waste polyurethane materials but it is complicated by high investment costs for a recycling line.

Chemical recycling of polyurethanes includes decomposition of polymers to oligomers or monomers by the action of an appropriate chemical reagent (Scheirs, J.: Polymer recycling, John Wiley & Sons, New York, 1998). The thus obtained products can again be utilized for preparation of new polyurethane products in various application fields.

Patented processes mention polyurethane decompositions based on hydrolysis (US 4,025,559; US 4,339,236), aminolysis (EP 1,149,862; Kanaya, K., Takahashi, S., J. Appl. Polym. Sci., 51, 675, 1994) or glycolysis (US 3,983,087; US 4,044,046; US 4,159,972; US 5,300,530; US 5,357,006; US 5,410,008; US 5,556,889; US 5,635,542; US 5,684,054; US 5,691,389; US 5,763,692; US 6,020,386; US 6,069,182; US 6,683,119; US 6,750,260; Czech patent application 2007-576).

At present, polyurethane recycling processes based on glycolysis seem to be most viable technologically. Nevertheless, the main drawback of glycolysis processes is a limited applicability of the obtained product, recycled polyol, which is, due to a high hydroxyl number (> 300 mg KOH.g⁻¹), and low functionality (as a rule, around two) suitable only as a minority component in the recipes for rigid polyurethane foams. Efforts to obtain a higher purity of the product and its lower hydroxyl number led to performing glycolysis with phase separation (split-phase glycolysis) (US 3,632,530; US 5,691,389).

Nevertheless, it is well known from literature that in the split-phase glycolysis, only the nonpolar (upper) liquid phase can be utilized, which makes only ca. 40 wt.% of the total product. The whole recycling process is then considerably uneconomic (Hicks D. A., Hemel C. B., Kirk A. C., Stapelton R. J., Thompson A. R., Proc. SPI Tech. Market. Conf. ,Chicago, 26 Sept. 1995, pp. 279-286).

At present, stress is put both on growing importance of utilization of renewable natural raw materials for industrial purposes and on maximum utilization of recycled materials. The same applies to polyurethane chemistry. In accord with continuously growing oil prices and increasing environmental requirements for production, vegetable and animal oils became, during the last decade, important natural raw material sources for a number of industrial applications. At present, most important are transformations of natural oils to polyols, which can be considered an emerging generation of renewable and more environmental-friendly raw materials, which successively replace petrochemical polyols, especially in the preparation of polyurethanes by the reaction of polyols with isocyanates. Polyols derived from vegetable (or animal) oils are referred to as natural, oleochemical or oil polyols (lonescu, M.: Chemistry and Technology of Polyols for Polyurethanes, Rapra, Shawbury, 2005).

The cheapest and easiest method of preparation of oil polyol from vegetable or animal oil is hydrolytic scission of the natural oils with water or with low-molecular-weight alcohols, polyols or aminoalcohols (Ionescu, M.: Chemistry and Technology of Polyols for Polyurethanes, Rapra, Shawbury, 2005).
Another possible preparation of oil polyols consists in a two-step synthesis where, in the first step, epoxidation of double bonds of unsaturated fatty acid chains occurs. Subsequently, the reaction of epoxide groups is performed with water, a monohydric alcohol (e.g. methanol) or polyol, e.g. glycerol, in the presence of a strongly acid catalyst. In this reaction, the oxirane ring opening occurs under the formation of hydroxy groups. The ring opening can be also accomplished using acids or amines (US 5,380,886; US 6,433,121; US 6,548,609; US 6,573,354; US 6,686,435; WO 2006012344; WO 03029182).

Polyurethanes based on oil polyols excel especially in improved resistance to moisture, enhanced hydrolytic stability, resistance to chemicals and UV radiation and also to weather conditions. Preparation of polyurethane foams (WO 2006116456) turns out to be the most prospective field of industrial utilization of oil polyols, ranking the largest segment on the market of polyurethane chemistry. The oil polyols can be further used in the production of polyurethane coatings, adhesives, glues, elastomers, casting resins and others (US 4,546,120; US 6,573,354; US 6,686,435).

It follows from the present technical background that no raw material for the polyurethane production is known which would combine useful properties of natural oils or oil polyols and of recycled polyols, prepared from waste polyurethane. The present invention combines utilization of recycled and natural renewable raw materials, which enables preparation of polyols with adjustable parameters like viscosity, functionality and the hydroxyl number. These polyols are then an appropriate raw material for production of polyurethanes with a broader utilization than that of recycled polyols prepared by known chemolysis processes.

### Summary of the invention

It was found experimentally that for decomposition of polyurethane, bioreagents from renewable sources can be used to advantage, in particular vegetable and animal oils and their derivatives if they contain functional hydroxy groups capable of reacting with urethane and urea structures present in polyurethanes. The bioreagents enable chemical depolymerization of polyurethanes under the formation of a product which can be further used as a part of the raw material for the production of a new, expanded or compact, polyurethane.
The experiments surprisingly showed that heating of waste polyurethane foam with a bioreagent leads to rapid dissolution of the foam and chemical depolymerization of polyurethane. The hydroxy groups of the bioreagent, in spite of certain steric hindrance of fatty acid chains and a lower reactivity of secondary alcohol groups, react with urethane and urea structures under the formation of a product, which is a mixture of original aliphatic polyols, carbamate polyols containing triglyceride, diglyceride and monoglyceride structure units of natural oils and fats and esterified fatty acids, aromatic amines (in the case the polyurethane contains also disubstituted urea structures) and the unreacted bioreagent. The structure units are bonded by urethane bonds to a carbamate derivative of the isocyanate used in the original polyurethane, most frequently bis(4-isocyanatophenyl)methane (PMDI) or a mixture of 2,4- and 2,6-diisocyanatotoluene (TDI).

The thus obtained product is an appropriate raw material for production of a new polyurethane. The raw material prepared using bioreagents for decomposition of waste polyurethanes possesses, in contrast to the polyols obtained by traditional glycolysis, an advantage of its possible wider applications as a consequence of its lower hydroxyl number and higher functionality. Modification of final properties of the products obtained by traditional chemolysis processes, most often by polyurethane glycolysis of polyurethanes, is difficult and feasible only on changing the hydroxyl number by removing excess of the reagent by vacuum distillation, which is a technologically and energetically demanding process.

The raw material obtained according to the invention, which contains exclusively renewable natural and recycled components, can be used in the reaction with isocyanates for production of new polyurethane materials alone or in a mixture with virgin polyols.

Bioreagents are natural oils or fats (triglycerides of higher fatty acids) or mixtures of natural oils or fats or their derivatives or a mixture of derivatives, which contain functional hydroxy groups and which can be obtained from renewable resources by physicochemical processes. Among bioreagents rank first of all vegetable oils with functional hydroxy groups (castor oil) and further oil polyols, derivatives of vegetable and animal oils obtained by chemical modification of vegetable and animal oils for the purpose of formation or enhancement of the number of hydroxy groups in the materials. The modification of natural oils and fats involves all processes leading to the formation of hydroxylated esters of natural fatty acids, in particular epoxidation of unsaturated fatty acids in oils and subsequent hydrolysis, alcoholysis, aminolysis or acidolysis of the oxirane rings under the formation of OH groups and, further, re-esterification of oils - triglycerides of fatty acids - with polyhydric alcohols, most often glycols. Natural oils include vegetable oils, in particular rapeseed, sunflower, soya, palm, olive, castor, thistle, linseed, peanut, coconut oil, root oils, wood oils and other vegetable oils and, further, animal fats and oils, first of all pork fat, beef fat and bone fat and oils from fish fat. Vegetable and animal oils and oil polyols are at present generally commercially accessible.

From the chemical viewpoint, a bioreagent is a triglyceride, diglyceride or monoglyceride or their mixture, where glycerol forms with fatty acids three, two or one ester bond and where the functional OH groups are (i) in glycerol units, (ii) in the main chain of fatty acids (secondary alcoholic OH group), or (iii) in the side chain of fatty acid (primary or secondary alcoholic OH group).

A bioreagent with functional hydroxy groups is also the product of re-esterification of a natural oil or fat with a polyhydric alcohol. The bioreagent then contains, in addition to the above-mentioned glyceride structures, also esters of fatty acids with other polyhydric alcohols. The functional OH groups are placed (i) in the chain of a polyhydric alcohol (primary or secondary alcoholic OH groups), (ii) in the main chain of fatty acid (secondary alcoholic OH groups), or (iii) in the side chain of fatty acid (primary or secondary alcoholic OH groups).

The bioreagent containing functional OH groups is a vegetable or animal oil or fat or their derivative, or their mixture containing functional OH groups. According to the present invention, castor oil or oil polyols prepared from castor or rapeseed or soya or fish oil or their mixtures are used to advantage as bioreagents.
As bioreagents, oil polyols can be used, prepared by known processes, such as by re-esterification of the oils or by opening oxirane rings in epoxidized oils with polyhydric alcohols (to advantage with glycols).

The preparation of a raw material for polyurethane production from waste polyurethanes is based on the reaction of waste polyurethane with a bioreagent containing functional hydroxy groups, which is a vegetable or animal oil or fat or a derivative of a vegetable or animal oil or fat, or their mixture containing functional hydroxy groups. The waste polyurethane and a bioreagent are mixed in the weight ratio at least 10/1 and at most 1/10. The polyurethane decomposition proceeds at the temperature 150-300 °C and at the pressure at least 100 kPa and at most 1000 kPa.

Waste polyurethanes utilizable in the preparation of the raw material are technological or post-consumer polyurethane waste or their mixture. (Polyurethane is the product of the reaction of polyisocyanates with a polyester or polyether or polydiene polyol.) Polyurethanes may contain, in addition to urethane groupings, also urea, allophanate or biuret structures, they can be expanded or compact and may contain additional auxiliary components or additives, such as inorganic and organic fillers. Suitable waste polyurethane is in particular waste flexible, semirigid and rigid foams based on aromatic polyisocyanates, most often on bis(4-isocyanatophenyl)methane (PMDI) or a mixture of 2,4- and 2,6-diisocyanatotoluene (TDI).

Preparation of the raw material can be performed to advantage by catalyzing the decomposition of waste polyurethane with mono-, di- and triethanolamine or sodium or potassium hydroxide or sodium or potassium ethanolate or titanium(IV) butoxide, isopropoxide or propoxide or their mixtures in arbitrary ratios, the catalyst/polyurethane weight ratio ranging from 1/500 to 1/10.

Strongly basic catalysts catalyze alkaline hydrolysis of bioreagent thus causing crossed coupling of bioreagents, which leads to enhanced molecular weight and viscosity of the product.

An overall reduction of energy costs can be achieved by exposing the reaction mixture of waste polyurethane and bioreagent to the action of 1 MHz-10 GHz electromagnetic radiation at temperature 150 - 300 °C and pressure at least 100 kPa and at most 1000 kPa.

In this way, a raw material for preparation of new polyurethanes is formed, which consists of products of the reaction of waste polyurethane with a bioreagent, which is a vegetable or animal oil or fat or its derivative with functional hydroxy groups or their mixture. This reaction product contains at least 80 wt. % of polyol component consisting of at least 25 wt. % of aliphatic polyols (i) of molecular weight at least 400 and at most 10000 and at most 75 wt.% of carbamate polyols (ii) of molecular weight at least 300 and at most 5000. The carbamate polyols (ii) contain triglyceride (a) or diglyceride (b) or monoglyceride (c) structure units of natural oils or fats or their mixture containing esterified fatty acids with at least 10 and at most 22 carbon atoms the structure units (a), (b) a (c), which are bonded by urethane bonds to a carbamate derivative of the isocyanate in the original polyurethane.

It follows from the analytical results for the products that the used experimental conditions and in particular the use of bioreagent with functional OH groups enable polyurethane recycling. The obtained liquid products have a markedly lower hydroxyl number than when using dipropylene glycol, which enables their utilization as a raw material for production of expanded and also compact polyurethanes. From comparison it further follows that microwave heating of the reaction mixture with a bioreagent leads to considerable faster decomposition of polyurethane, which considerably lowers the energy intensity of the process.

With the exception of rigid polyurethane foams, the raw material can be used in the preparation of semirigid and flexible foams, electric insulating cast resins, self-spilling floorings, coatings or adhesives. Moreover, by appropriate choice of bioreagent, it is possible to modify the resulting functionality of the raw material, its hydroxyl number and the reactivity dependending on the content of primary and secondary alcoholic OH groups and functional amino groups and thus to obtain a raw material with optimum parameters, according to required application.

### Figures

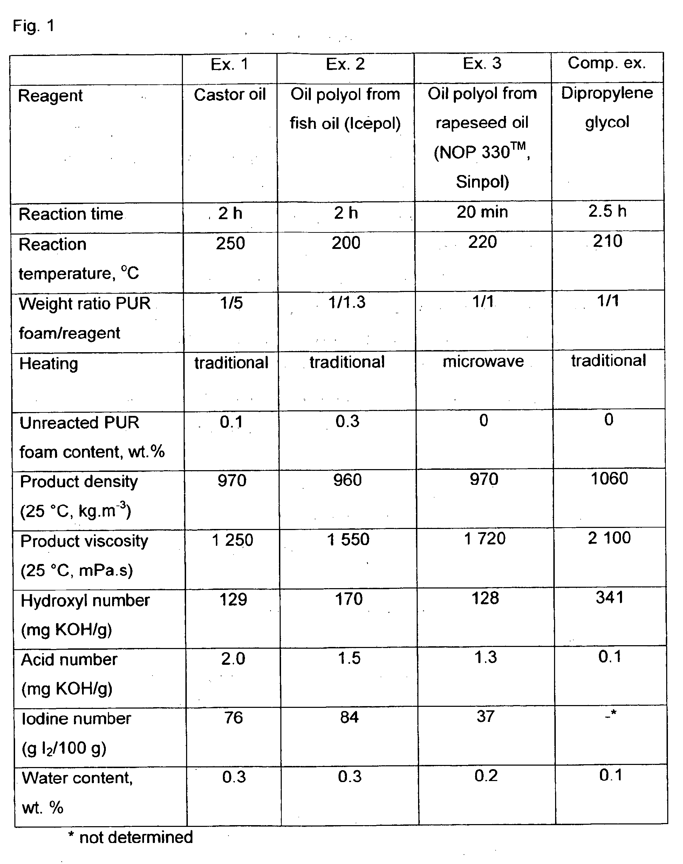

Fig. 1 Experimental conditions and analytical results

### Examples of realization of the invention

### Example 1

In a batch reactor equipped with a mechanical stirrer, thermometer and nitrogen inlet, 20 g of cut flexible polyurethane foam based on bis(4-isocyanatophenyl)methane (PMDI) and polyether-polyol of apparent density 55 kg/m³ was mixed with castor oil (Sigma-Aldrich) in the weight ratio 1:5 and heated in a bath at 250 °C and atmospheric pressure for 2 h. The polyurethane was depolymerized to a liquid product of density 970 kg/m³, hydroxyl number 129 mg KOH/g, acid number 2.0 mg KOH/g, iodine number 76 g I₂/100 g and water content 0.3 wt.%. Viscosity of the product was 1250 mPa.s and the content of unreacted solid residue was 0.1 wt.%.

The obtained liquid product is a raw material for polyurethane production, containing 99 wt.% of polyol components - aliphatic polyether-polyols of molecular weight 5000 and carbamate polyols of average molecular weight 2100, containing predominantly triglyceride structure units of castor oil with esterified ricinoleic acid (with 18 carbons in the chain), the structure units being bonded by urethane bonds to a bis(4-isocyanatophenyl)methane derivative from the original polyurethane foam.

### Example 2

In a batch reactor equipped with a mechanical stirrer, thermometer and nitrogen inlet, 20 g of cut flexible polyurethane foam based on bis(4-isocyanatophenyl)methane (PMDI) was mixed with fish-oil-based polyether-polyol (Icepol) of apparent density 55 kg/m³ in the weight ratio 1:1.3 and heated in a bath at 200 °C and atmospheric pressure for 2 h. The polyurethane was depolymerized to a liquid product of density 960 kg/m³, hydroxyl number 170 mg KOH/g, acid number 1.5 mg KOH/g, iodine number 84 g I₂/100 g and water content 0.3 wt.%. Viscosity of the product was 1550 mPa.s and the content of unreacted solid residue was 0.3 wt.%.

The obtained liquid product is a raw material for polyurethane production, containing 89 wt.% of polyol component, which contains aliphatic polyether-polyol of molecular weight 5000 and carbamate polyols of average molecular weight 1200 containing predominantly diglyceride and monoglyceride structure units of fish oil with esterified fatty acids containing 14-22 carbons in the chain, the structure units being bonded by urethane bonds to a bis(4-isocyanatophenyl)methane derivative from the original polyurethane foam.

### Example 3

In a batch reactor equipped with a mechanical stirrer, thermometer and nitrogen inlet, 20 g of cut flexible polyurethane foam based on bis(4-isocyanatophenyl)methane (PMDI) and polyether-polyol of apparent density 55 kg/m³ was mixed with re-esterified oil polyol on the basis of rapeseed oil (NOP 330^{™}, Sinpol) in the weight ratio 1:1 and monoethanolamine in the weight ratio to polyurethane foam 1:100 and heated by the action of microwave (MW) radiation with input 1 kW and a frequency of 915 MHz at 220 °C and atmospheric pressure for 20 min. The polyurethane was completely depolymerized to a liquid product of density 970 kg/m³, hydroxyl number 128 mg KOH/g, acid number 1.3 mg KOH/g, iodine number 37 g I₂/100 g and water content 0.2 wt. Viscosity of the product was 1720 mPa.s at 25 °C.

The obtained liquid product is a raw material for polyurethane production, containing 91 wt.% of polyol component, which contains aliphatic polyether-polyol of molecular weight 5000 and carbamate polyols of average molecular weight 900 containing predominantly monoglyceride structure units of rapeseed oil with esterified fatty acids containing 16-18 carbons in the chain, the structure units being bonded by urethane bonds to a bis(4-isocyanatophenyl)methane derivative from the original polyurethane foam.

### Comparison example

For comparison, decomposition of the same polyurethane foam as in Examples 1 - 3 was performed by standard glycolysis with dipropylene glycol (a mixture of isomers). 20 g of cut of the flexible polyurethane foam based on bis(4-isocyanatophenyl)methane (PMDI) and polyetherpolyol of apparent density 55 kg/m³ was mixed with dipropylene glycol in the weight ratio 1:1 and diethanolamine in the weight ratio to polyurethane foam 1:100 and heated in a bath at 210 °C and atmospheric pressure for 2.5 h. The polyurethane was completely glycolyzed to a liquid product of density 1060 kg/m³, viscosity 2100 mPa.s (25 °C), hydroxyl number 341 mg KOH/g, acid number 0.1 mg KOH/g, and water content 0.1 wt.

The obtained liquid product is a mixture of polyols, which, due to a high hydroxyl number, can be used only as a raw material for production of rigid polyurethane foams.

In the examples of realization of the invention, the following analytical methods were used:
The density of the product was determined pycnometrically according to ASTM D 4669-93. Viscosity was determined on a rotation rheometer Bohlin Gemini HRnano (Malvern Instruments), cone-plate geometry (diameter 40 mm). The hydroxyl number of the product was determined by acetylation according to ISO 2554-1974. The iodine number of the product was determined by the Hanu 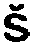 method (addition of iodine bromide to double bonds of fatty acids, the unreacted IBr was reacted with Kl and the formed I₂ titrated with Na₂S₂O₃). The water content was determined by the Karl Fischer method. Molecular weights of liquid products were determined by size exclusion chromatography (SEC) with RI (RIDK 102, ECOM) and UV-vis photometric (LCD 2084, ECOM) detection. Mobile phase: THF (1ml.min⁻¹), column: 300 mm x 8 mm PL 1000 A (Polymer Laboratories), calibration with polystyrene standards.

### Application in industry

The raw material, prepared by the given method from polyurethane waste utilizing bioreagents from renewable resources, can be used alone or in a mixture with virgin polyols in the reaction with polyisocyanates for industrial production of expanded and compact polyurethane materials.

## Claims

1. The raw material for polyurethane production from waste polyurethane consisting of the reaction product of waste polyurethane, said waste polyurethane being a product of the reaction of polyisocyanates with a polyether or polydiene polyol, and a bioreagent, which is a vegetable oil or fat or a derivative of vegetable or animal oil or fat with functional hydroxy groups or their mixture, the reaction product of polyurethane waste with a bioreagent containing at least 80 wt.% of a polyol component consisting of at least 25 wt.% aliphatic polyol (i) of molecular weight at least 400 and at most 10000 and at most 75 wt.% of carbamate polyol (ii) of molecular weight at least 300 and at most 5000, the carbamate polyols (ii) containing triglyceride (a), diglyceride (b) or monoglyceride (c) structure units of natural oils or fats or their mixture containing esterified fatty acids with at least 10 and at most 22 carbon atoms in their chains, the structure units (a), (b) and (c) bonded by a urethane bond to the carbamate derivative of an isocyanate of the original polyurethane.

2. A process for preparing the raw material for production of polyurethanes from waste polyurethanes according to Claim 1 **characterized in that** the waste polyurethane is mixed with bioreagent (I) in the weight ratio at least 10/1 and at most 1/10 and polyurethane decomposition proceeds at the temperature 150-300 °C and at pressure at least 100 kPa and at most 1000 kPa.

3. A process for preparing the raw material for production of polyurethanes from waste polyurethanes according to Claim 2 **characterized in that** waste polyurethane is the product of the reaction of aromatic polyisocyanate and polyester or polyether or polydienic polyol.

4. A process for preparing of the raw material for production of polyurethanes from waste polyurethanes according to Claim 2 or 3 **characterized in that** bioreagent (I) is castor oil or oil polyols prepared from castor oil or from rapeseed oil or from fish oil or from soya oil or from their mixture.

5. A process for preparing the raw material for production of polyurethanes from waste polyurethanes according to Claim 2 or 3 or 4 **characterized in that** the polyurethane decomposition is catalyzed by addition of monoethanolamine or diethanolamine or triethanolamine or sodium hydroxide or potassium hydroxide or sodium ethanolate or potassium ethanolate or titanium(IV) butoxide or titanium(IV) isopropoxide or titanium(IV) propoxide, the catalyst polyurethane weight ratio ranging from 1/500 to 1/10.

6. A process for preparing the raw material for production of polyurethanes from waste polyurethanes according to Claim 2 or 3 or 4 or 5 **characterized in that** the temperature 150 to 300 °C is provided by electromagnetic radiation of frequency ranging from 1 MHz to 10 GHz.

## Patentansprüche

1. Rohstoff für die Polyurethanherstellung aus Abfallpolyurethan, der aus dem Reaktionsprodukt von Abfallpolyurethan, wobei es sich bei dem Abfallpolyurethan um ein Reaktionsprodukt von Polyisocyanaten mit einem Polyether oder Polydienpolyol handelt, und einem Bioregens gebildet ist, bei dem es sich um ein pflanzliches Öl oder Fett oder ein Derivat eines pflanzlichen oder tierischen Öls oder Fettes mit funktionellen Hydroxygruppen oder deren Gemische handelt, wobei das Reaktionsprodukt von Abfallpolyurethan und einem Bioreagens mindestens 80 Gew.-% einer Polyolkomponente enthält, die aus mindestens 25 Gew.-% aliphatischem Polyol (i) mit einer Molmasse von zumindest 400 und höchstens 10000 und höchstens 75 Gew.-% Carbamatpolyol (ii) mit einer Molmasse von zumindest 300 und höchstens 5000 gebildet ist, wobei die Carbamatpolyole (ii) Triglycerid (a)-, Diglycerid (b)- oder Monogylcerid (c)-Struktureinheiten von natürlichen Ölen oder Fetten oder deren Gemischen enthalten, die veresterte Fettsäuren mit zumindest 10 und höchstens 22 Kohlenstoffatomen in ihren Ketten enthalten, wobei die Struktureinheiten (a), (b) und (c) über eine Urethanbindung an das Carbamatderivat eines Isocyanats des ursprünglichen Polyurethans gebunden sind.

2. Verfahren zur Herstellung eines Rohstoffes für die Polyurethan-herstellung aus Abfallpolyurethan gemäß Anspruch 1, **dadurch gekennzeichnet, dass** das Abfallpolyurethan mit dem Bioreagens (I) in einem Gewichtsverhältnis von mindestens 10/1 und höchstens 1/10 vermischt wird und die Polyurethanzersetzung bei einer Temperatur von 150-300 °C und einem Druck von mindestens 100 kPa und höchstens 1000 kPa stattfindet.

3. Verfahren zur Herstellung eines Rohstoffes für die Polyurethanherstellung aus Abfallpolyurethan gemäß Anspruch 2, **dadurch gekennzeichnet, dass** das Abfallpolyurethan das Produkt der Umsetzung eines aromatischen Polyisocyanats und Polyesters oder Polyethers oder Polydienpolyols ist.

4. Verfahren zur Herstellung eines Rohstoffes für die Polyurethan-herstellung aus Abfallpolyurethan gemäß Anspruch 2 oder 3, **dadurch gekennzeichnet, dass** es sich bei dem Bioreagens (I) um Castoröl oder Ölpolyole handelt, die ausgehend von Castoröl oder Rapsöl oder Fischöl oder Sojaöl oder deren Gemischen hergestellt wurden.

5. Verfahren zur Herstellung eines Rohstoffes für die Polyurethan-herstellung aus Abfallpolyurethan gemäß Anspruch 2 oder 3 oder 4, **dadurch gekennzeichnet, dass** die Polyurethanzersetzung katalysiert wird, indem Monoethanolamin oder Diethanolamin oder Triethanolamin oder Natriumhydroxid oder Kaliumhydroxid oder Natriumethanolat oder Kaliumethanolat oder Titan(IV)butoxid oder Titan(IV)isopropoxid oder Titan(IV)propoxid zugefügt wird, wobei das Katalysator/Polyurethan-Gewichtsverhältnis im Bereich von 1/500 bis 1/10 liegt.

6. Verfahren zur Herstellung eines Rohstoffes für die Polyurethan-herstellung aus Abfallpolyurethan gemäß Anspruch 2 oder 3 oder 4 oder 5, **dadurch gekennzeichnet, dass** die Temperatur von 150 bis 300 °C durch elektromagnetische Strahlung mit einer Frequenz im Bereich von 1 MHz bis 10 GHz geliefert wird.

## Revendications

1. Matière première pour produire du poly(uréthane) à partir de déchets de poly(uréthane) consistant en le produit de réaction de déchets de poly(uréthane), lesdits déchets de poly(uréthane) étant un produit de la réaction de poly(isocyanates) avec un poly(éther) ou poly(diène) polyol, et d'un bioréactif, qui est une huile ou graisse végétale ou un dérivé d'huile ou de graisse végétale ou animale avec des groupes hydroxy fonctionnels ou leur mélange, le produit de réaction de déchets de poly(uréthane) avec un bioréactif contenant au moins 80 % en poids d'un composant polyol consistant en au moins 25 % en poids de polyol aliphatique (i) de masse moléculaire d'au moins 400 et d'au plus 10 000 et d'au plus 75 % en poids de carbamate polyol (ii) de masse moléculaire d'au moins 300 et d'au plus 5 000, les carbamates polyols (ii) contenant des motifs structurels triglycéride (a), diglycéride (b) ou monoglycéride (c) d'huiles ou de graisses naturelles ou leur mélange contenant des acides gras estérifiés avec au moins 10 et au plus 22 atomes de carbone dans leurs chaînes, les motifs structurels (a), (b) et (c) étant liés par une liaison uréthane au dérivé carbamate d'un isocyanate du poly(uréthane) d'origine.

2. Procédé de préparation de la matière première destinée à produire des poly(uréthanes) à partir de déchets de poly(uréthane) selon la revendication 1, **caractérisé en ce que** les déchets de poly(uréthane) sont mélangés avec un bioréactif (I) dans le rapport en poids d'au moins 10/1 et d'au plus 1/10 et la décomposition de poly(uréthane) a lieu à la température de 150 à 300 °C et à une pression d'au moins 100 kPa et d'au plus 1 000 kPa.

3. Procédé de préparation de la matière première destinée à produire des poly(uréthanes) à partir de déchets de poly(uréthane) selon la revendication 2, **caractérisé en ce que** les déchets de poly(uréthane) sont le produit de la réaction de poly(isocyanate) aromatique et de poly(ester) ou de poly(éther) ou de polyol polydiénique.

4. Procédé de préparation de la matière première destinée à produire des poly(uréthanes) à partir de déchets de poly(uréthane) selon la revendication 2 ou 3, **caractérisé en ce que** le bioréactif (I) est de l'huile de ricin ou des huiles polyols préparées à partir d'huile de ricin ou d'huile de colza ou à partir d'huile de poisson ou à partir d'huile de soja ou à partir de leur mélange.

5. Procédé de préparation de la matière première destinée à produire des poly(uréthanes) à partir de déchets de poly(uréthane) selon la revendication 2, 3 ou 4, **caractérisé en ce que** la décomposition de poly(uréthane) est catalysée par l'addition de monoéthanolamine ou de diéthanolamine ou de triéthanolamine ou d'hydroxyde de sodium ou d'hydroxyde de potassium ou d'éthanolate de sodium ou d'éthanolate de potassium ou de butoxyde de titane (IV) ou d'isopropoxyde de titane (IV) ou de propoxyde de titane (IV), le rapport en poids catalyseur/poly(uréthane) allant de 1/500 à 1/10.

6. Procédé de préparation de la matière première destinée à produire des poly(uréthanes) à partir de déchets de poly(uréthane) selon la revendication 2, 3, 4 ou 5, **caractérisé en ce que** la température de 150 à 300 °C est fournie par un rayonnement électromagnétique de fréquence allant de 1 MHz à 10 GHz.
